# EUROPÄISCHE PATENTSCHRIFT

(11) **EP 2 745 374 B1**
(45) Veröffentlichungstag und Bekanntmachung des Hinweises auf die Patenterteilung: **13.03.2019**
(21) Anmeldenummer: 12753438.6
(22) Anmeldetag: 14.08.2012
(51) Int. Cl.: H02J 3/14, H02J 7/34, H02J 9/06, H05B 33/08

(54) **BETRIEB EINES LEUCHTMITTELS MIT AUTONOMEM ENERGIESPEICHER**
OPERATION OF AN ILLUMINANT AT AN AUTONOMOUS ENERGY STORE
FONCTIONNEMENT D'UNE SOURCE LUMINEUSE À ACCUMULATEUR D'ÉNERGIE AUTONOME

(30) Priorität: 16.08.2011 DE 102011080996
(43) Veröffentlichungstag der Anmeldung: 25.06.2014
(73) Patentinhaber: Tridonic GmbH & Co. KG, 6851 Dornbirn (AT)
(72) Erfinder: FENKART, Karl-Heinz, A-6845 Hohenems (AT)
(74) Vertreter: Rupp, Christian
(86) Internationale Anmeldenummer: PCT/EP2012/065884
(87) Internationale Veröffentlichungsnummer: WO 2013/024090

(56) Entgegenhaltungen:
- DE-A1- 19 516 838
- DE-A1-102008 048 046
- DE-C2- 2 639 506
- GB-A- 2 429 343
- US-A1- 2004 066 094
- US-A1- 2008 024 008
- US-A1- 2010 207 448
- US-A1- 2011 133 649
- US-A1- 2011 153 106
- US-B1- 7 218 056

## Beschreibung

Die Erfindung betrifft ein Betriebsgerät zum Betreiben von mindestens einem Leuchtmittel mittels eines autonomen Energiespeichers sowie eine Leuchte aufweisend ein derartiges Betriebsgerät, ein Verfahren zum Betrieb bzw. zur Steuerung eines derartigen Betriebsgeräts, eine integrierte Schaltung, ein Computersoftware-Programmprodukt, und ein Beleuchtungssystem.

Die Druckschrift US 7,218,056 B1 offenbart ein Beleuchtungsgerät mit mehreren Energiequellen und mehreren Betriebsarten und die Druckschrift US 2011/0133649 A1 offenbart einen Mechanismus zum Lichtmanagement.

Aus dem Stand der Technik ist es bereits bekannt, zusätzlich zu den mit einer Netzspannung versorgten Leuchten auch Notlichtgeräte einzusetzen. Diese Notlichtgeräte werden bei einem Versagen der Netzversorgung eingesetzt, um in Räumlichkeiten, in denen mit Netzspannung versorgten Leuchten installiert sind, eine Mindestbeleuchtung zu gewährleisten.

Solche Notlichtgeräte sind in der Lage, die Netzversorgungsspannung zu überwachen und entsprechend einen Notlichtbetrieb zu veranlassen, sobald z.B. die Netzspannung unter einem voreingestellten Schwellenwert liegt. Üblicherweise wird zur Erkennung des Zustands des Netzes eine für die Netzspannung repräsentative Spannung gemessen. Es kann z.B. über einen eingangsseitigen Spannungsteiler die Netzspannung direkt gemessen werden. Bei Erkenntnis eines Notzustands, insbesondere einer zu niedrigen Versorgungsspannung, wird dann der Notzustand des Notlichtgeräts aktiviert, in dem eine interne Batterie oder ein interner Akkumulator zur Versorgung einer Lampe eingeschaltet wird.

Andererseits gibt es Netze, in denen zu unterschiedlichen Zeiten unterschiedliche Preise für die Netzversorgung verlangt werden. Insbesondere kann der Strom nachts günstiger tarifiert sein als tagsüber. Bei manchen Haushaltsgeräten mag der Verbraucher diese Tarifierung für sich nutzen, in dem er bestimmte Geräte nachts einschaltet. Z.B. ist es möglich, Wasch- oder Spülmaschinen so zu programmieren, dass sie automatisch nachts gestartet werden.

Ausgehend von diesem Stand der Technik liegt nunmehr der vorliegenden Erfindung die Aufgabe zu Grunde, den Betrieb von Leuchtmitteln im Hinblick auf die differenzierte Tarifierung der Netzversorgung zu verbessern.

Zentraler Gedanke der Erfindung ist es nunmehr, dass eine Leuchte einen Energiespeicher aufweist, von dem ausgehend die Leuchte über einen längeren Zeitraum in der gleichen Weise betreibbar ist, wie wenn sie mit Netzspannung betrieben wird.

In Zeiten, in denen ein Energieversorger höhere Preise für die Versorgung verlangt, kann dann die Leuchte ausgehend von dem Energiespeicher betrieben werden, wobei der Energiespeicher in günstigeren Energiezeiten nachgeladen wird.

Im Gegensatz zu Notbeleuchtungen wird also dann in diesen Zeiten höherer Tarife die Leuchte auch ausgehend von dem Energiespeicher betrieben, obwohl die AC-Versorgung - im Gegensatz zum Notlichtfall - nicht zusammengebrochen ist.

Die Energieversorgung aus dem Speicher kann stützend bzw. ergänzend zur AC-Versorgung verwendet werden.

Das Betriebsgerät in der Leuchte weist entweder eine interne Intelligenz auf, die den Betriebsmodus AC-Versorgung/autonome Versorgung schaltet. Alternativ oder zusätzlich kann das Signal, ob nunmehr vorzugsweise aus der autonomen Energieversorgung die Leuchte betrieben werden soll oder nicht, von außen entweder über eine separate Steuerleitung - beispielsweise Busleitung oder drahtlos - oder über eine auf die AC-Versorgung selbst aufmodulierte Information via Trägerfrequenzanlage oder Powerline Communication (PLC) übermittelt werden. Diese Betriebstaktung kann indessen bspw. auch vom Benutzer über Schalter, Drehsteller etc. vergleichbar einer Zeitschaltuhr eingestellt werden.

Das Betriebsgerät in der Leuchte kann die Zeitdauern, in denen vorzugsweise durch die autonome Energieversorgung die Leuchte betrieben werden soll, auch adaptiv selbst lernen, beispielsweise über die Art der Aktivierung durch den Benutzer (Ein-/Ausschaltvorgänge), durch Helligkeitssignale von einem Lichtsensor etc.

Beispielsweise kann die Betriebsschaltung auch das Nachladen der autonomen Energieversorgung veranlassen, wenn auf Nachtstrom dadurch geschlossen wird, dass die Leuchte während einem längeren Zeitraum bereits nicht mehr betrieben wurde.

Als Energiespeicher können beispielsweise speziell ausgestattete hochkapazitive Kondensatoren Superkondensatoren oder Supercaps verwendet werden. Alternativ können auch Batterien oder Akkumulatoren verwendet werden.

Die Steuerschaltung in dem Betriebsgerät übernimmt auch die Steuerung des Lade-/Entlademanagements für den Energiespeicher.

Eine bevorzugte Ausführungsweise ist die Verwendung von LEDs als Leuchtmittel, da bei diesen LEDs aufgrund ihrer typischen Betriebsspannungen die autonome Energieversorgung von einer Batterie identisch zu der Bereitstellung einer Niedervoltbusspannung durch die erste Stufe eines Konverters betrieben werden kann.

Gemäß einem ersten Aspekt der vorliegenden Erfindung wird also ein Betriebsgerät mit einem Versorgungsausgang, an dem ein Leuchtmittel angeschlossen ist, vorgeschlagen, hierbei aufweisend
- eine Energiespeichereinheit zum Speichern von elektrischen Energie,
- eine mit einer Netzspannung zu versorgende Ladeschaltung zum Laden der Energiespeichereinheit während eines Ladebetriebsmodus,
- eine während eines Speicherbetriebsmodus mit der Energiespeichereinheit versorgte Treiberschaltung zum Betreiben des Leuchtmittels, und
- eine Steuereinheit zum Aktivieren des Ladebetriebsmodus oder des Speicherbetriebsmodus unabhängig vom Zustand der Netzspannung, insbesondere unabhängig von der Höhe der Netzspannung, wobei die Steuereinheit dazu ausgebildet ist, bei einer Netzversorgung mit Hochtarifstrom oder bei einer Hoch- bzw. Spitzenlastphase des Versorgungsnetzes auf den Speicherbetriebsmodus umzuschalten.

Gemäß einem weiteren Aspekt der vorliegenden Erfindung wird ein Verfahren zum Betreiben eines Leuchtmittels mittels eines Betriebsgeräts aufweisend eine Energiespeichereinheit, eine Ladeschaltung, eine Treiberschaltung und eine Steuereinheit, wobei das Leuchtmittel an einem Versorgungsausgang des Betriebsgerätes angeschlossen ist, vorgeschlagen, aufweisend
- das Aufladen einer Energiespeichereinheit mittels der mit einer Netzspannung versorgten Ladeschaltung während eines Ladebetriebsmodus,
- das Betreiben des Leuchtmittels mittels der mit der Energiespeichereinheit versorgten Treiberschaltung während eines Speicherbetriebsmodus, wobei die Steuereinheit den Ladebetriebsmodus oder den Speicherbetriebsmodus unabhängig vom Zustand der Netzspannung, insbesondere unabhängig von der Höhe der Netzspannung, aktiviert und wobei die Steuereinheit bei einer Netzversorgung mit Hochtarifstrom oder bei einer Hoch- bzw. Spitzenlastphase des Versorgungsnetzes auf den Speicherbetriebsmodus umschaltet.

In einem solchen Betriebsgerät oder Verfahren, ist die Steuereinheit dazu ausgebildet, bei einer Netzversorgung mit Hochtarifstrom oder bei einer Hoch- bzw. Spitzenlastphase des Versorgungsnetzes auf den Speicherbetriebsmodus umzuschalten. Mit anderen Worten erfolgt der Speicherbetriebsmodus in Zeiten, in denen der Preis für die Netzversorgung und/oder die Belastung des Versorgungsnetzes verhältnismäßig hoch sind.

Vorzugsweise wird bei einer Netzversorgung mit Niedertarifstrom oder bei einer Schwachlastphase des Versorgungsnetzes auf den Ladebetriebsmodus umgeschaltet.

Der Steuereinheit können bspw. Informationen bezüglich des Stromtarifs oder der Last des Versorgungsnetzes übermittelt werden.

Die Informationen können über einen PLC-Empfänger via Powerline Communication, über eine Steuerleitung wie beispielsweise eine digitale Busleitung, über eine Benutzerschnittstelle oder über einen Sensor übermittelt werden.

Vorzugsweise kann eine Netztreiberschaltung zum Betreiben des Leuchtmittels während eines Netzbetriebsmodus vorgesehen sein, wobei während des Speicherbetriebsmodus die Netztreiberschaltung ausgeschaltet wird.

Gemäß einem weiteren Aspekt der vorliegenden Erfindung wird eine Leuchte vorgeschlagen, aufweisend ein Leuchtmittel und ein obiges Betriebsgerät zum Betreiben des Leuchtmittels.

Das Leuchtmittel kann vorzugsweise eine Leuchtdiode sein. Gemäß einem weiteren Aspekt der vorliegenden Erfindung wird eine integrierte Schaltung vorgeschlagen, insbesondere ein ASIC, zum Durchführen des obigen Verfahrens.

Gemäß einem weiteren Aspekt wird ein Computersoftware-Programmprodukt vorgeschlagen, das das obige Verfahren unterstützt, wenn es durch einen Microcomputer ausgeführt wird.

Weitere Vorteile, Merkmale und Eigenschaften der vorliegenden Erfindung sollen nunmehr Bezug nehmend auf die Figuren der beigefügten Zeichnungen erläutert werden.
Fig. 1 zeigt schematisch ein Betriebsgerät bzw. ein System gemäß der vorliegenden Erfindung.
Fig. 2 zeigt schematisch ein weiteres Ausführungsbeispiel der vorliegenden Erfindung.
Fig. 3 zeigt eine weitere Ausführungsform der Erfindung.
Fig. 4 zeigt eine Ausführungsform eines Beleuchtungssystems gemäß der vorliegenden Erfindung.

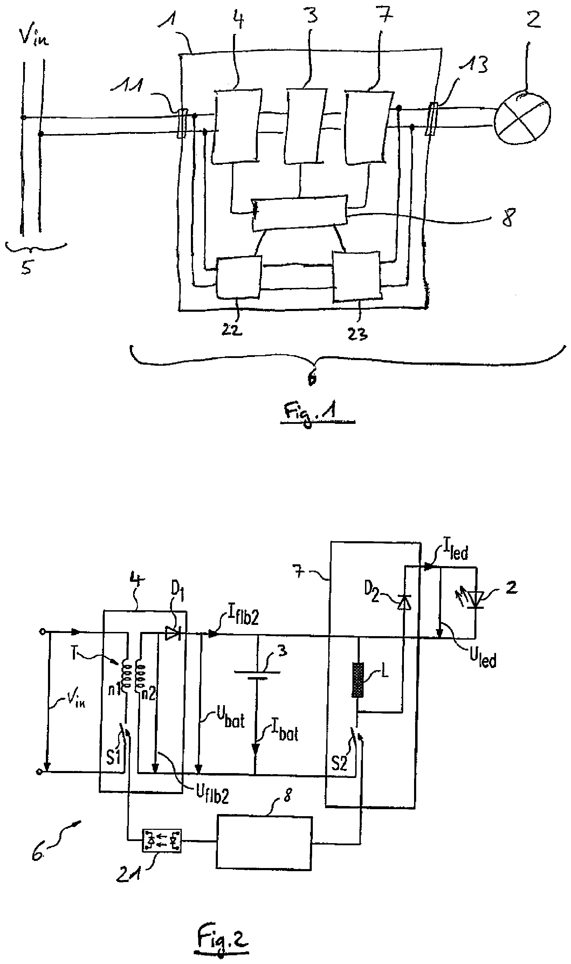

Das in Fig. 1 schematisch dargestellte und allgemein mit dem Bezugszeichen 1 versehene erfindungsgemäße Betriebsgerät ist im dargestellten Ausführungsbeispiel zum Betreiben eines Leuchtmittels 2 vorgesehen. Eine Leuchte 6 umfasst das Betriebsgerät 1 und das Leuchtmittel 2. Das Betriebsgerät 1 ist eingangsseitig an ein Stromversorgungsnetz angeschlossen, welches eine Netzversorgungsspannung Vin zur Verfügung stellt, und weist hierfür einen an Netzleitungen 5 anschließbaren Netzspannungseingang 11 auf. Die Netzspannung kann dabei als Wechselspannung, gleichgerichtete Wechselspannung, oder auch als Gleichspannung vorliegen.

Das Betriebsgerät 1 weist weiterhin als wesentliche Komponenten eine Ladeschaltung 4, eine Energiespeichereinheit 3 sowie eine Treiberschaltung 7 und eine Steuereinheit 8 auf. Der Ladeschaltung 4 wird eingangsseitig die Netzspannung Vin zugeführt, welche zum Aufladen der Energiespeichereinheit 3 genutzt wird. Das Aufladen erfolgt während eines Ladebetriebsmodus.

Die vollständig- oder nur teilweise geladene Energiespeichereinheit 3 versorgt in einem Speicherbetriebsmodus die Treiberschaltung 7, welche wiederum das Leuchtmittel 2 in bekanntenerweise betreibt. Das Leuchtmittel 2 ist mit der Treiberschaltung 7 über einen Versorgungsausgang 13 des Betriebsgeräts 1 anschließbar.

Parallel zur Serienschaltung bestehend aus Ladeschaltung 4, Energiespeichereinheit 3 und Treiberschaltung 7 sind eine Netzbearbeitungseinheit 22 und ein Netztreiberschaltung 23 vorgesehen. Die Netzbearbeitungseinheit 22 dient bekanntermaßen dazu, die zugeführte Netzspannung Vin zu bearbeiten, in dem beispielsweise die Spannung gleichgerichtet und/oder geglättet wird, oder in dem eine aktive oder passive Leistungsfaktorkorrektur (auch Power Factor Correction genannt) durchgeführt wird. Die aktive Leistungsfaktorkorrektur kann bspw. durch einen Hochsetzsteller oder einen Flyback-Konverter (Isolierter Sperrwandler) gebildet werden.

Die bearbeitete Spannung wird anschließend der Netztreiberschaltung 23 zugeführt, die das Leuchtmittel 2 versorgt. Die Netztreiberschaltung 23 wird in bekannter Weise von der Steuereinheit 8 gesteuert. Die Netztreiberschaltung 23 kann z.B. in Form eines Wechselrichters mit einer Halbbrückenschaltung (nicht gezeigt) ausgestaltet sein, wobei zwei in Serie geschaltete und mit Gleichspannung versorgte Schalter der Halbbrückenschaltung gegenläufig von der Steuereinheit 8 getaktet werden, um eine gewünschte Ausgangsspannung bzw. eine gewünschte Ausgangsleistung am Versorgungsausgang 13 bereitzustellen.

Neben dem Speicherbetriebsmodus, bei dem das Leuchtmittel 2 ausschließlich von der in der Energiespeichereinheit 3 gespeicherten elektrischen Energie versorgt wird, ist somit eine weitere Betriebsart vorgesehen. Das Leuchtmittel 2 kann nämlich in einem Netzbetriebsmodus über die Netzspannung Vin von der Netztreiberschaltung 23 versorgt werden. Die Treiberschaltung 7 und die Netztreiberschaltung 23 können im jeweiligen Modus ausschließlich eingeschaltet werden. Alternativ kann in einem Hybridbetriebsmodus die Steuereinheit 8 das Betriebsgerät 1 derart ansteuern, dass sowohl die Treiberschaltung 7 als auch die Netztreiberschaltung 23 gleichzeitig aktiv sind und Leistung zum Betreiben des Leuchtmittels 2 bereitstellen.

Fig. 2 zeigt eine besondere Ausführungsform eines Teils des Betriebsgeräts 1 der Erfindung. In Fig. 2 sind Netzbearbeitungseinheit 22 und Netztreiberschaltung 23 nicht gezeigt. Die Ladeschaltung 4 ist dabei durch einen sogenannten Flyback-Konverter gebildet, der einerseits einen Transformator T mit einer Primärwicklung n1 und einer Sekundärwicklung n2 sowie andererseits einen steuerbaren Schalter S1 aufweist. In bekannter Weise kann durch ein entsprechendes abwechselndes Öffnen und Schließen des Schalters S1 die von der Netzversorgungsspannung Vin zur Verfügung gestellte Energie auf die Sekundärseite des Flyback-Konverters 4 übertragen und zum Aufladen der Energiespeichereinheit 3 genutzt werden. Die Energieübertragung findet dabei im geöffneten Zustand des Schalters S1 statt, wobei hierzu auf der Ausgangsseite des Flyback-Konverters 4 ferner eine Diode D1 vorgesehen ist.

Die Ansteuerung des steuerbaren Schalters S1 erfolgt durch die Steuereinheit 8 des Betriebsgeräts 1, wobei die Ansteuerung insbesondere galvanisch getrennt über einen Optokoppler 21 erfolgt. Die Steuereinheit 8 steuert hierbei den Schalter S1 alternierend an.

Die Energiespeichereinheit 3 ist in Form einer Batterie bzw. eines Akkumulators ausgestaltet. Alternativ kann die Energiespeichereinheit 3 aus einem oder mehreren Doppelschichtkondensatoren oder Superkondensatoren bestehen. Vorteilhafterweise ist es vorgesehen, dass die Steuereinheit 8 den Strom Ibat durch die Energiespeichereinheit 3 und/oder die an der Energiespeichereinheit 3 abfallende Spannung Ubat erfasst. Die Stromerfassung erfolgt insbesondere durch einen in Serie zur Energiespeichereinheit 3 geschalteten Mess-Widerstand (nicht gezeigt).

Die als Schaltregler ausgebildete Treiberschaltung 7 weist einen weiteren steuerbaren Schalter S2, eine Induktivität L sowie eine Diode D2 auf. Durch alternierendes Ansteuern des Schalters S2 durch die Steuereinheit 8 wird auf diese Weise dem Leuchtmittel 2 ein Strom bzw. eine Leistung zur Verfügung gestellt, über welchen/welche dieses betrieben wird. Das Tastverhältnis und/oder die Frequenz, mit dem der Schalter S2 durch die Steuereinheit 8 angesteuert wird, kann dabei variiert werden, um die Höhe des dem Leuchtmittel zugeführten Stroms und damit die Leistung, bei welcher das Leuchtmittel betrieben wird, einzustellen. Auf diese Weise kann sichergestellt werden, dass auch bei schwankender Leistung der Energiespeichereinheit das Leuchtmittel trotz allem mit gleichbleibender Leistung betrieben werden kann.

Das in der Ausführungsform gemäß Fig. 2 gezeigte Leuchtmittel 2 ist eine Leuchtdiode oder LED. Das erfindungsgemäße Betriebsgerät 1 kann aber jede Art von Leuchtmittel betreiben, insbesondere Gasentladungslampen oder Glühlampen. Der Versorgungsausgang kann dazu ausgelegt sein, ein oder mehrere Leuchtmittel 2 zu versorgen. Die Treiberschaltung 7 kann vorzugsweise entsprechend dem angeschlossenen Leuchtmittel 2 angepasst werden.

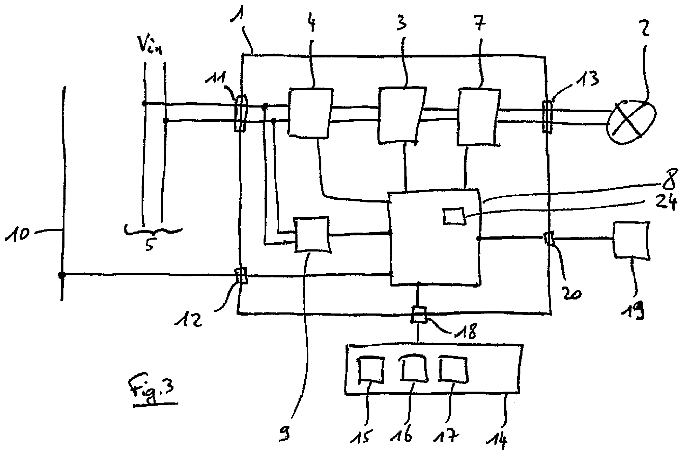

Fig. 3 zeigt eine weitere Ausführungsform der Erfindung. Das Leuchtmittel 2 kann erfindungsgemäß von der autonomen Energiespeichereinheit 3 betrieben werden (Speicherbetriebsmodus), sobald der Preis für die Netzversorgung hoch ist bzw. sobald er über einem Schwellenwert liegt. Der Einsatz der Energiespeichereinheit 3 ist nicht wie etwa bei einem Notlichtgerät nur vom elektrischen Zustand der Netzleitungen 5 bzw. der Netzversorgung abhängig. Bei einem Notlichtgerät wird z.B. bei einem Stromausfall oder bei einer Netzstörung eine interne Batterie eingeschaltet, um die Versorgung des Leuchtmittels sicherzustellen. Eine Netzstörung in diesem Sinne kann z.B. eine Unterspannung, eine Überspannung, eine Frequenzänderungen oder das Auftreten von Oberschwingungen sein.

Die Steuereinheit 8 steuert den Einsatz der Energiespeichereinheit 3. Die Entscheidung über das Ein- oder Ausschalten der Treiberschaltung 7 erfolgt anhand einer Information, die für den Preis der Netzversorgung repräsentativ ist.

Diese Information erhält die Steuereinheit 8 beispielsweise über eine Powerline Communication (PLC). Eine entsprechende hochfrequente Datenübertragung erfolgt über die Netzleitung bis zum Netzspannungseingang 11 des Betriebsgeräts. Die Netzspannung Vin wird einem PLC-Empfänger 9 zugeführt, der die hochfrequente Modulation der Netzspannung wieder demoduliert. Die demodulierte Information wird der Steuereinheit 8 weitergeleitet, welche auf Basis dieser Information insbesondere über den Preis der Netzversorgung eine Entscheidung über das Einschalten der Treiberschaltung 7 trifft.

In Fig. 3 ist auch gezeigt, dass die Steuereinheit 8 die Information auch über eine Steuerleitung 10 in Form von beispielsweise einem Bus erhalten kann. Das Betriebsgerät 1 ist entsprechend mit einem Steuersignaleingang 12 in Form beispielsweise einer digitalen Busschnittstelle versehen. Eingehende Steuersignale, die von einer externen Steuereinheit (nicht gezeigt) gesendet werden, werden von der Steuereinheit 8 überwacht und im Hinblick auf den Einsatz der Energiespeichereinheit 3 und der Treiberschaltung 7 bewertet.

Ein Benutzer kann auch direkt über eine Benutzerschnittstelle 14 und über einen Benutzerschnittstelleneingang 18 der Steuereinheit 8 eine Information bezüglich des Preises des Netzstroms übermitteln. Die Benutzerschnittstelle 14 kann Bedienelemente wie eine Taste 15, einen Potentiometer 16 oder ein Touchscreen oder Berührungsbildschirm 17 umfassen. Auch z.B. über einen Sensor 19 und einen entsprechenden Sensoreingang 20 kann die Information dem Betriebsgerät 1 übermittelt werden.

Die Information über den Strompreis kann auch in einem Datenspeicher 24 aufgezeichnet werden, insbesondere nachdem diese Information von der Steuereinheit 8 empfangen worden ist. Vorzugsweise kann auch werksseitig bei der Herstellung des Betriebsgeräts im Datenspeicher 24 gespeichert werden, zu welchen Zeitpunkten Niedertarifstrom zu beziehen ist.

Der PLC-Empfänger 9, der Steuersignaleingang 12, der Benutzerschnittstelleneingang 18 und der Sensoreingang 20 können zusammen in einem Betriebsgerät 1 eingesetzt werden. Alternativ kann auch eine Untermenge dieser vier Elemente vorgesehen sein. Insbesondere kann das Betriebsgerät 1 nur den PLC-Empfänger 9, nur den Steuersignaleingang 12, nur den Benutzerschnittstelleneingang 18 oder nur den Sensoreingang 20 zur Informations-Übermittlung aufweisen.

Die der Steuereinheit 8 übermittelte Information bezieht sich vorzugsweise auf den aktuellen Preis für die Netzversorgung, wobei dieser Preis ein sofortiges Einschalten der Treiberschaltung 7 mit sich ziehen kann. Alternativ kann sich die Information aber auch auf einen noch nicht aktuellen, zukünftigen Preis bzw. Preisänderung beziehen. Z.B. besteht dann die Information aus einem Preis pro Energieeinheit und aus einer Zeitangabe, ab wann der angegebene Preis gültig ist. Vorstellbar ist auch, dass die Zeitangabe bestimmen soll, bis wann ein gegebener Preis gültig ist. Alle diese Informationen sind im Datenspeicher 24 abspeicherbar.

Die Information, auf Basis derer die Treiberschaltung 7 ein- und ausgeschaltet wird, bezieht sich im oben beschriebenen Ausführungsbeispiel auf den Strompreis. Erfindungsgemäß wird der tatsächliche Strompreis oder ein für den Strompreis repräsentativer Wert übermittelt, wobei dann die Steuereinheit 8 entscheiden muss, ob bei diesem Preis eher der Speicherbetriebsmodus (über die Energiespeichereinheit 3 und Treiberschaltung 7) oder der Netzbetriebsmodus (durch Netzversorgung über die Netzbearbeitungseinheit 22 und Netztreiberschaltung 23) zum Betrieb des Leuchtmittels verwendet wird. Diese Entscheidung wird vorzugsweise aufgrund von Erfahrungswerten getroffen, in dem die Steuereinheit 8 ehemalige empfangene, im Datenspeicher 24 abgespeicherte Preisangaben mit der aktuellen Angabe vergleicht. Z.B. wenn der aktuelle Strompreis über einem Mittelwert der ehemaligen Preisangaben liegt, so wird in den Speicherbetriebsmodus umgeschaltet.

Alternativ oder zusätzlich wird nicht direkt der Strompreis, sondern eine allgemeinere Information über die Tarifierung der Steuereinheit 8 übermittelt. Vorzugsweise kann übermittelt werden, ob die Versorgung über die Netzleitung 5 einem Hoch- oder Niedertarifstrom entspricht. Liegt ein Hochtarif vor, so werden entsprechend dem Speicherbetriebsmodus die Energiespeichereinheit 3 und die Treiberschaltung 7 eingesetzt.

Alternativ oder zusätzlich kann auch lediglich übermittelt werden, zu welchem Zeitpunkt der Hochtarifstrom gültig ist. Beim Auftreten eines Hochtarifstroms wird in den Speicherbetriebsmodus gewechselt.

Demgegenüber kann bei einem Niedertarifstrom bzw. bei einem niedrigen Strompreis das Leuchtmittel 2 über die Netztreiberschaltung 24 betrieben und versorgt werden (Netzbetriebsmodus). Gleichzeitig kann eine Phase mit einem niedrigeren Preis dazu benutzt werden, die Energiespeichereinheit 3 zu laden (Ladebetriebsmodus). Diese Ladung erfolgt, in dem die mit Netzspannung Vin versorgte Ladeschaltung 4 von der Steuereinheit 8 entsprechend gesteuert wird.

Alternativ oder zusätzlich wird dem Betriebsgerät 1 Informationen über die Netzlast übermittelt, insbesondere wie hoch die Netzlast ist, oder ob eine Schwachlastphase oder eine Hoch- bzw. Spitzenlastphase vorhanden ist. In einer Spitzenlastphase wird vorzugsweise in den Speicherbetriebsmodus gewechselt. In einer Schwachlastphase wird vorzugsweise in den Netzbetriebsmodus zum Betreiben des Leuchtmittels 2 und in den Ladebetriebsmodus zum Aufladen der Energiespeichereinheit 3 umgeschaltet.

Alternativ oder zusätzlich kann der Steuereinheit 8 z.B. über den PLC-Empfänger 9 oder über die Steuerleitung 10 ein Befehlssignal gesendet werden, welches automatisch den Speicherbetriebsmodus oder den Netzbetriebsmodus auslöst. Vorzugsweise wird gleichzeitig mit dem Netzbetriebsmodus auch der Ladebetriebsmodus zum Aufladen der Energiespeichereinheit 3 gestartet.

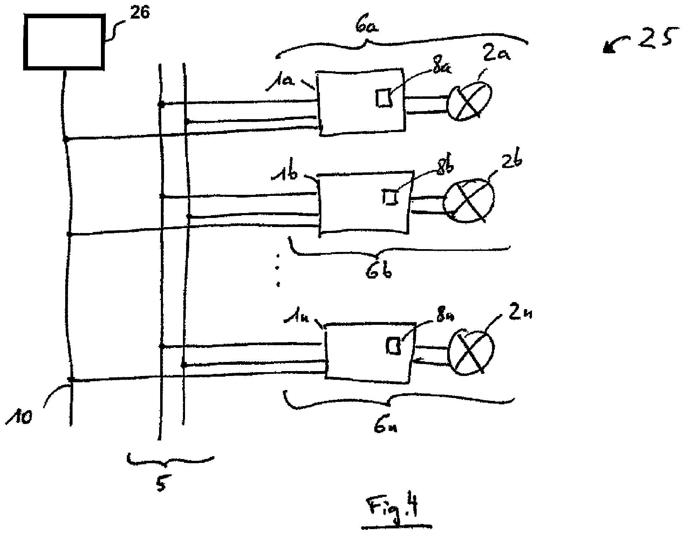

Fig. 4 zeigt eine Ausführungsform eines Beleuchtungssystems gemäß der vorliegenden Erfindung.

In einem Beleuchtungssystem 25 sind mehrere Leuchten 6a, 6b, 6n vorhanden. Dies einerseits um die Normen bezüglich der Beleuchtungsstärke, der Blendung, oder der Gleichmäßigkeit der Helligkeit zu erhalten. Andererseits wird durch eine Mehrzahl von Leuchten auch das Deckenbild gewährleistet, der Komfort eines Benutzers erhöht, und die allgemeine Akzeptanz des Beleuchtungssystems 25 gewährleistet. Es ist nicht unüblich, dass sowohl die erstgenannten als auch die zweitgenannten Anforderungen übererfüllt werden.

Eine erfindungsgemäße Leuchte 6a, 6b, 6n aufweisend jeweils ein Leuchtmittel 2a, 2b, 2n und ein erfindungsgemäßes Betriebsgerät 1a, 1b, 1n mit einer Steuereinheit 8a, 8b, 8n kann bei einem Hochtarifstrom oder bei einer Spitzenlastphase des Versorgungsnetzes wie oben beschrieben in den Speicherbetriebsmodus umgeschaltet werden.

Vorab definierte Betriebsgeräte 1a, 1b, 1n können alternativ ihr zugeordnetes Leuchtmittel 2a, 2b, 2n ausschalten, sobald ein Hochtarifstrom oder eine Spitzenlastphase des Versorgungsnetzes erkannt wird. Die vorab definierten Betriebsgeräte 1a, 1b, 1n werden vorzugsweise derart ausgewählt, dass ihre zugewiesenen Leuchtmittel 2a, 2b, 2n ausgeschaltet werden können, ohne dass die oben-genannten Anforderungen an das Beleuchtungssystem 25 beeinträchtigt werden.

Da aber die Beleuchtungsanforderungen übererfüllt sein können, wird in Zeiten in denen die Netzversorgung sehr hochpreisig ist bzw. bei Netzversorgung mit Hochtarifstrom oder bei Spitzenlastbedingungen, erfindungsgemäß vorgeschlagen, die Beleuchtungsstärke des Beleuchtungssystems 25 insgesamt zu reduzieren. Dazu wird vorgeschlagen, eine oder mehrere Leuchten ganz abzuschalten. D.h. anstatt in den Speicherbetriebsmodus zu wechseln, wird das Leuchtmittel des jeweiligen Betriebsgeräts nicht betrieben bzw. ausgeschaltet. Somit können Kosten gespart werden.

Vorzugsweise entscheidet eine zentrale Einheit 26 welche Leuchtmittel 2a, 2b, 2n auszuschalten sind. Dafür sendet die zentrale Einheit 26 entsprechende Befehle über die Steuerleitung 10. Alternativ können die Befehle über die Netzleitung via Powerline Communication übermittelt werden.

### Bezugszeichen

- 1, 1a, 1b, 1n: Betriebsgerät
- 2, 2a, 2b, 2n: Leuchtmittel
- 3: Energiespeichereinheit
- 4: Ladeschaltung
- 5: Netzleitung mit Netzspannung Vin
- 6, 6a, 6b, 6n: Leuchte
- 7: Treiberschaltung
- 8, 8a, 8b, 8n: Steuereinheit
- 9: PLC-Empfänger
- 10: Steuerleitung
- 11: Netzspannungseingang
- 12: Steuersignaleingang
- 13: Versorgungsausgang
- 14: Benutzerschnittstelle
- 15: Taste
- 16: Potentiometer
- 17: Touchscreen
- 18: Benutzerschnittstelleneingang
- 19: Sensor
- 20: Sensoreingang
- 21: Optokoppler
- 22: Netzbearbeitungseinheit
- 23: Netztreiberschaltung
- 24: Datenspeicher
- 25: Beleuchtungssystem
- 26: zentrale Einheit
- D1, D2: Diode
- L: Induktivität
- n1: Primärwicklung
- n2: Sekundärwicklung
- S1, S2: Schalter
- T: Transformator

## Patentansprüche

1. Betriebsgerät (1) mit einem Versorgungsausgang (13), an dem ein Leuchtmittel (2) angeschlossen ist, hierbei aufweisend:
- eine Energiespeichereinheit (3) zum Speichern von elektrischer Energie,
- eine mit einer Netzspannung (Vin) zu versorgende Ladeschaltung (4) zum Laden der Energiespeichereinheit (3) während eines Ladebetriebsmodus,
- eine während eines Speicherbetriebsmodus mit der Energiespeichereinheit (3) versorgte Treiberschaltung (7) zum Betreiben des Leuchtmittels (2), und
- eine Steuereinheit (8) zum Aktivieren des Ladebetriebsmodus oder des Speicherbetriebsmodus unabhängig vom Zustand der Netzspannung (Vin), insbesondere unabhängig von der Höhe der Netzspannung (Vin) **dadurch gekennzeichnet, dass** die Steuereinheit (8) dazu ausgebildet ist, bei einer Netzversorgung mit Hochtarifstrom oder bei einer Hoch- bzw. Spitzenlastphase des Versorgungsnetzes auf den Speicherbetriebsmodus umzuschalten.

2. Betriebsgerät (1) nach einem der vorigen Ansprüche, wobei bei einer Netzversorgung mit Niedertarifstrom oder bei einer Schwachlastphase des Versorgungsnetzes auf den Ladebetriebsmodus umgeschaltet wird.

3. Betriebsgerät (1) nach einem der vorigen Ansprüche, wobei der Steuereinheit (8) Informationen bezüglich des Stromtarifs oder der Last des Versorgungsnetzes übermittelt werden.

4. Betriebsgerät (1) nach Anspruch 3,
wobei die Informationen über einen PLC-Empfänger (9) via Powerline Communication, über eine Steuerleitung (10) wie beispielsweise eine digitale Busleitung, über eine Benutzerschnittstelle (14) oder über einen Sensor (20) übermittelt werden.

5. Betriebsgerät (1) nach einem der vorigen Ansprüche, aufweisend eine Netztreiberschaltung (23) zum Betreiben des Leuchtmittels (2) während eines Netzbetriebsmodus, wobei während des Speicherbetriebsmodus die Netztreiberschaltung (23) ausgeschaltet wird.

6. Leuchte (6) aufweisend ein Betriebsgerät (1) nach einem der vorhergehenden Ansprüche zum Betreiben des Leuchtmittels (2).

7. Leuchte nach Anspruch 6,
wobei das Leuchtmittel (2) wenigstens eine organische und/oder anorganische Leuchtdiode ist.

8. Verfahren zum Betreiben eines Leuchtmittels (2) mittels eines Betriebsgeräts (1) aufweisend eine Energiespeichereinheit (3), eine Ladeschaltung (4), eine Treiberschaltung (7) und eine Steuereinheit (8), wobei das Leuchtmittel (2) an einen Versorgungsausgang (13) des Betriebsgeräts angeschlossen ist, aufweisend
- das Aufladen der Energiespeichereinheit (3) mittels der mit einer Netzspannung (Vin) versorgten Ladeschaltung (4) während eines Ladebetriebsmodus,
- das Betreiben des Leuchtmittels (2) mittels der mit der Energiespeichereinheit (3) versorgten Treiberschaltung (7) während eines Speicherbetriebsmodus,
wobei die Steuereinheit (8) den Ladebetriebsmodus oder den Speicherbetriebsmodus unabhängig vom Zustand der Netzspannung (Vin), insbesondere unabhängig von der Höhe der Netzspannung (Vin), aktiviert, und **dadurch gekennzeichnet, dass** die Steuereinheit (8) bei einer Netzversorgung mit Hochtarifstrom oder bei einer Hoch- bzw. Spitzenlastphase des Versorgungsnetzes auf den Speicherbetriebsmodus umschaltet.

9. Integrierte Schaltung, insbesondere ein ASIC, die zur Durchführung eines Verfahrens nach Anspruch 8 ausgebildet ist.

## Claims

1. Operating device (1) having a supply output (13), to which a lighting means (2) is connected and comprising:
- a power storage unit (3) for storing electrical energy,
- a charging circuit (4) to be supplied with a mains voltage (Vin) for charging the power storage unit (3) during a charging operation mode,
- a driver circuit (7) which, during a storage operation mode, is supplied by the power storage unit (3) for operating the lighting means (2), and
- a control unit (8) for activating the charging operation mode or the storage operation mode independent of the state of the mains voltage (Vin), in particular independent of the magnitude of the mains voltage (Vin), **characterized in that** the control unit (8) is designed to switch to storage operation mode in the event of a power supply with high tariff current or in the event of a high or peak load phase of the power supply system.

2. Operating device (1) according to any one of the preceding Claims,
wherein, in the event of a power supply with low tariff current or in the event of a low load phase of the power supply system, a switch is made to charging operation mode.

3. Operating device (1) according to one of the preceding Claims,
wherein information relating to the current tariff or the load on the power supply system is transmitted to the control unit (8).

4. Operating device (1) according to Claim 3,
wherein the information is transmitted via a PLC receiver (9) by means of powerline communication, via a control line (10), such as a digital bus line for example, via a user interface (14) or via a sensor (20).

5. Operating device (1) according to one of the preceding Claims,
comprising a network driver circuit (23) for operating the lighting means (2) during a power supply operation mode, wherein the network driver circuit (23) is switched off during the storage operation mode.

6. Lamp (6) comprising an operating device (1) according to one of the preceding Claims for operating the lighting means (2).

7. Lamp according to Claim 6,
wherein the lighting means (2) is at least one organic and/or inorganic light diode.

8. Method for operating a lighting means (2) by means of an operating device (1) comprising a power storage unit (3), a charging circuit (4), a driver circuit (7) and a control unit (8), wherein the lighting means (2) is connected to a supply output (13) of the operating device, comprising
- charging the power storage unit (3) by means of the charging circuit (4) supplied with a mains voltage (Vin) during a charging operation mode,
- operating the lighting means (2) by means of the driver circuit (7) supplied by the power storage unit (3) during a storage operation mode,
wherein the control unit (8) activates the charging operation mode or the storage operation mode independent of the state of the mains voltage (Vin), in particular independent of the magnitude of the mains voltage (Vin), and **characterized in that** the control unit (8) switches to storage operation mode in the event of a power supply with high tariff current or in the event of a high or peak load phase of the power supply system.

9. Integrated circuit, in particular an ASIC, which is designed to carry out a method according to Claim 8.

## Revendications

1. Dispositif de commande (1) doté d'une sortie d'alimentation (13), à laquelle est raccordé un système d'éclairage (2), présentant :
une unité d'accumulation d'énergie (3) destinée à stocker de l'énergie électrique,
un circuit de charge (4) destiné à être alimenté avec une tension de réseau (Vin) pour la charge de l'unité d'accumulation d'énergie (3) pendant un mode de fonctionnement en charge,
un circuit de commande (7) alimenté avec l'unité d'accumulation d'énergie (3) pendant un mode de fonctionnement en stockage pour la mise en fonction du système d'éclairage (2), et
une unité de commande (8) destinée à activer le mode de fonctionnement en charge ou le mode de fonctionnement en stockage de manière indépendante par rapport à l'état de la tension de réseau (Vin), notamment, indépendante de l'ampleur de la tension de réseau (Vin) **caractérisé en ce que** l'unité de commande (8) est prévue pour, lors d'une alimentation de réseau en courant à tarif élevé ou lors d'une phase d'un pic de charge du réseau d'alimentation, commuter vers le mode de fonctionnement en stockage.

2. Dispositif de commande (1) selon l'une des revendications précédentes,
dans lequel, pour une alimentation de réseau avec du courant à bas tarif, ou pour une phase de charge faible du réseau d'alimentation, il y a une commutation sur le mode de fonctionnement en charge.

3. Dispositif de commande (1) selon l'une des revendications précédentes,
dans lequel des informations concernant le tarif du courant ou la charge du réseau d'alimentation sont transmises à l'unité de commande (8).

4. Dispositif de commande (1) selon la revendication 3,
dans lequel les informations sont transmises par un récepteur PLC (9) par une communication Powerline, par une ligne de commande (10), comme, par exemple, une ligne bus numérique, par une interface d'utilisateur (14) ou par un capteur (20).

5. Dispositif de commande (1) selon l'une des revendications précédentes,
présentant un circuit d'utilisateur de réseau (23) pour la mise en fonction du système d'éclairage (2) pendant un mode de fonctionnement de réseau, où le circuit d'utilisateur de réseau (23) est débranché pendant le mode de fonctionnement en stockage.

6. Lampe (6) présentant un dispositif de commande (1) selon l'une des revendications précédentes pour la mise en fonction du système d'éclairage (2).

7. Lampe selon la revendication 6,
où le système d'éclairage (2) est au moins une diode luminescente organique et/ou inorganique.

8. Procédé de mise en fonction d'un système d'éclairage (2) au moyen d'un dispositif de commande (1) présentant une unité d'accumulation d'énergie (3), un circuit de charge (4), un circuit de commande (7) et une unité de commande (8), où le système d'éclairage (2) est raccordé à une sortie d'alimentation (13) du dispositif de commande, présentant
la charge de l'unité d'accumulation d'énergie (3) au moyen du circuit de charge (4) alimenté avec une tension de réseau (Vin) pendant un mode de fonctionnement en charge,
la mise en fonction du système d'éclairage (2) au moyen du circuit de commande (7) alimenté avec l'unité d'accumulation d'énergie (3) pendant un mode de fonctionnement en stockage,
où l'unité de commande (8) active le mode de fonctionnement en charge ou le mode de fonctionnement en stockage de manière indépendante par rapport à l'état de la tension de réseau (Vin), notamment, indépendante de l'ampleur de la tension de réseau (Vin), et **caractérisé en ce que** l'unité de commande (8) commute vers le mode de fonctionnement en stockage lors d'une alimentation de réseau avec du courant à tarif élevé ou lors d'une phase de pic de charge du réseau d'alimentation.

9. Circuit intégré, notamment ASIC, qui est prévu pour l'exécution d'un procédé selon la revendication 8.
